# EUROPEAN PATENT APPLICATION

(11) **EP 4 389 318 A1**
(43) Date of publication of application: **26.06.2024**
(21) Application number: 22214418.0
(22) Date of filing: 19.12.2022
(51) Int. Cl.: B22F 1/05, B22F 3/105, C22C 1/05, C22C 1/059, C22C 1/10, C22C 9/00, H01R 39/20, H01R 39/26, H01R 43/12

(54) **METHOD OF PRODUCING A COMPOSITE MATERIAL FOR A SLIP RING BRUSH**

(71) Applicant: ABB SCHWEIZ AG, 5400 Baden (CH)
(72) Inventor: QIN, Jian, 723 49 Västerås (SE); ZHAO, Su, 723 56 Västerås (SE)
(74) Representative: Kransell & Wennborg KB

(57) **Abstract**

A method of producing a composite material for a slip ring brush, the method comprising: a) mixing copper powder with a grain size of 10-500 µm with graphene to obtain a copper-graphene mixture, the content of graphene in the copper-graphene mixture being in a range of 0.5-5 wt.% of the total weight of the copper-graphene mixture, and b) sintering the copper-graphene mixture.

## Description

### TECHNICAL FIELD

The present disclosure generally relates to a composite material for a brush of a slip ring unit.

### BACKGROUND

Slip ring units are used for conducting current to or from the rotating shaft of electrical machines. Slip ring units comprise a slip ring, typically made of copper, bronze or stainless steel and a carbon brush as the counterpart, typically made of graphite or a metal-graphite blend.

The slip ring is mounted to the rotor shaft while the carbon brush is stationary. The carbon brush is pressed to the slip ring surface by a spring to ensure good electrical contact.

The graphite has two functions. The first is to provide sufficient conductivity to transfer the needed current to the slip ring and the second is to act as a solid lubricant to provide low friction to keep the slip ring intact.

The main drawback of existing carbon brushes is that they wear out over time and need to be replaced to ensure proper functionality. Depending on the application carbon brushes usually need to be replaced every 6 to 12 months, generating high maintenance costs during the entire lifetime of electrical machines.

Moreover, due to the wear of the carbon brush carbon, dust is created, which can lead to clogging or electrical bridging for example.

A common practice to prolong the lifetime of brushes is to limit the contact pressure between the brush and slip ring to a very low level, for example 20-25 kPa. Because the contact resistance is inversely proportional to the contact pressure, the electrical losses at the contact region are relatively high. Another limitation of the commercial graphite containing brushes is that the frictional performance is sensitive to humidity which limits the application in less humid environments.

CN112981159 B discloses a preparation method of a graphene-reinforced copper-based composite material. The method comprises mixing copper powder and an organic metal carbon source and spark plasma sintering to obtain a three-dimensional graphene/carbide or oxide co-enhanced copper-based composite material.

### SUMMARY

A general object of the present disclosure is to provide a method of producing a composite material that solves or at least mitigates the problems of the prior art.

There is hence according to a first aspect of the present disclosure provided a method of producing a composite material for a slip ring brush, the method comprising: a) mixing copper powder with a grain size of 10-500 µm with graphene to obtain a copper-graphene mixture, the content of graphene in the copper-graphene mixture being in a range of 0.5-5 wt.% of the total weight of the copper-graphene mixture, and b) sintering the copper-graphene mixture.

The composite material exhibits superior tribological properties including low friction and high wear resistance in comparison with the commercial graphite containing electrical brushes. The electrical contact resistance is 1 to 2 orders of magnitude lower than those of the commercial electrical brushes. Due to the low wear nature of the copper graphene composite produced by the method, the contact pressure between the brush and slip ring can be increased. This will further reduce contact resistance and voltage drop, so the electrical loss is minimized during application.

The composite material thus provides low friction, good electrical conductivity and additionally much less wear which leads to an extended lifetime of the brush part. Reduced voltage drop and contact resistance also opens up the possibility to increase the current carrying capacity. Unlike the graphite containing commercial brushes which are sensitive to humidity change, the present composite material is robust and can operate at a broad humidity and temperature range.

With regards to CN112981159 B, the present composite material has better electrical conductivity because it is free of oxides and carbides.

Herein the term graphene is used collectively for carbon atoms in a 2D-honeycomb lattice in the form of mono-layer sheets, bi-layer sheets, few (3-5 layers)-layer sheets, or nano-platelets having a thickness of at most 50 nm, e.g., within the range of 1 to 50 nm.

According to one embodiment the sintering is spark plasma sintering.

The high speed of the spark plasma sintering process ensures that it can densify powders with small particle size while avoiding coarsening which accompanies standard densification processes, such as non-spark plasma sintering techniques. Samples of composite material produced by this method have shown to have a compact density between 80 to 99% of the theoretical density of pure copper.

Due to the rapid nature of the spark plasma sintering process, which is characterised by a high heating rate and short sintering time, typically only a couple of minutes, the composite material retains the structure of the graphene material, and it is free from aggregation compared to other sintering techniques which take much longer time, causing the graphene sheets to oxidise or agglomerate, deteriorating the lubricating and electrical properties of graphene.

According to one embodiment step b) is performed at a temperature of 650-950°C and under a pressure of 10-100MPa.

According to one embodiment step b) is performed under an inert atmosphere. This eliminates the risk of oxidation of the composite material. Oxidation reduces the electrical conductivity of materials.

According to one embodiment step b) is performed for at most 20 minutes, such as at most 15 minutes, such as at most 10 minutes.

According to one embodiment step b) is performed for at least 2 minutes, such as at least 3 minutes. Step b) may for example be performed for 5 minutes.

According to one embodiment the content of graphene in the copper-graphene mixture is in a range of 1-3 wt.% of the total weight of the copper-graphene mixture. It has been found that this range provides an optimal trade-off between cost, and lubrication and wear resistance properties, while accounting for the risk of graphene turning into graphite.

According to one embodiment step a) in addition to mixing the copper powder with the graphene, involves mixing additives with the copper powder and the graphene to obtain the copper-graphene mixture.

According to one embodiment the additives include a stabilizer and a binder.

According to one embodiment the mixing in step a) is a mechanical mixing. The mechanical mixing is a dry mixing. The mixing can be performed in a high-speed shaker, for example, with adequate results. Other mixing methods such as ball milling may also be employed.

According to one embodiment step b) is the only sintering step performed for producing the composite material.

By only performing spark plasma sintering, the density of the composite material will be high enough to be used as a brush in a slip ring unit. If the density would be increased further by an additional primary sintering step followed by the spark plasma sintering, the hardness of the material would be increased, and this would provide too much wear on the slip ring.

According to one embodiment the graphene is graphene nanoplatelets. Graphene nanoplatelets is a low-cost material which suffices for the purpose of making the composite material.

There is according to a second aspect provided a composite material obtainable by means of the method of the first aspect.

There is according to a third aspect provided a slip ring brush comprising a composite material according to the second aspect.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a flowchart of a method of producing a composite material for a slip ring brush; and
Fig. 2 is a side view of a slip ring unit comprising a slip ring brush made by the method in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

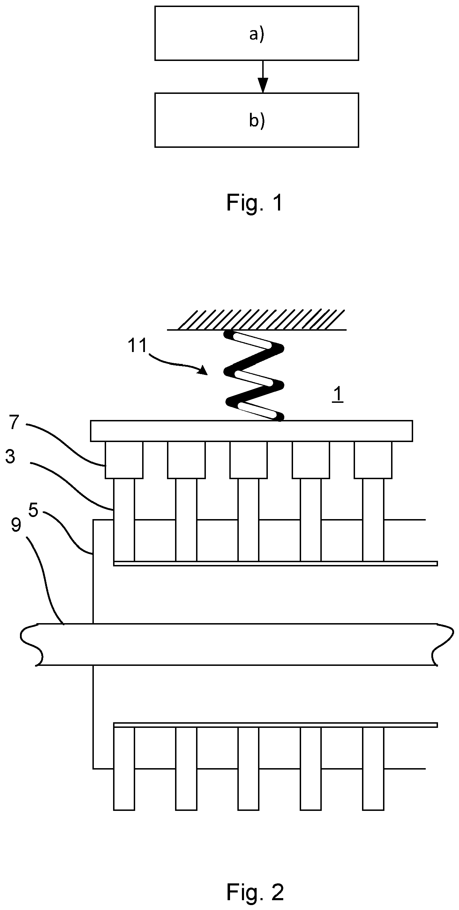

Fig. 1 depicts a method of producing a composite material for a slip ring brush.

In a step a) copper powder with a grain size of 10-500 µm is mixed with graphene to obtain a copper-graphene mixture.

The content of graphene in the copper-graphene mixture is in a range of 0.5-5 wt.% of the total weight of the copper-graphene mixture. The content of graphene in the copper-graphene mixture may for example be in a range of 1-3 wt.% of the total weight of the copper-graphene mixture.

Step b) of mixing is preferably a mechanical mixing.

The copper powder and the graphene may be mixed vigorously, for example in a high-speed shaker. According to one example, the shaking speed may be 700 rpm and the mixing time may be 150 seconds. In tests, a paint shaker model SK35 from Fast & Fluid was used. The mixing time varies depending on the amount of material mixed.

The graphene may for example be graphene nanoplatelets, graphene nanopowder, or graphene flakes.

Step a) may also comprise mixing additives with the copper powder and the graphene. The additives may for example include a stabilizer and a binder.

In a step b) the copper-graphene mixture is sintered. The composite material is thus obtained.

The sintering in step b) may be spark plasma sintering.

The sintering in step b) may be carried out at a temperature of 650-950°C and under a pressure of 10-100MPa, such as 10-75 MPa.

The composite material may be shaped as a slip ring brush in step b), or it may be shaped as a slip ring brush after step b). The slip ring brush thus obtained may thus be composed of the composite material obtained according to the method.

Step b) is preferably carried out under an inert atmosphere.

Step b) is preferably the only sintering step performed to obtain the composite material.

Step b) may typically be performed for at most 20 minutes, such as at most 15 minutes, such as at most 10 minutes. Step b) may typically be performed for at least 2 minutes, such as at least 3 minutes. Thus, typically, step b) is performed in the range of 2-20 minutes, for example in the range of 3-15 minutes, or 3-10 minutes. According to one example, step b) is performed for 5 minutes.

Fig. 2 depicts a slip ring unit 1. The slip ring unit 1 is mounted to a shaft 9. The shaft 9 may for example be a rotor shaft of an electrical machine.

The slip ring unit 1 comprises a plurality of slip rings 3 arranged in a support 5. The support is attached to the shaft 9.

The slip ring unit 1 comprises a plurality of slip ring brushes 7 made of the composite material obtained by the method described above.

Each slip ring brush 7 is arranged in mechanical and electrical contact with a respective slip ring 3. The slip ring brushes 7 are pressed radially inwards towards a respective slip ring 3 by means of a force member 11, such as one or more mechanical springs. The force may be higher than 25 kPa, such as 30 kPa or higher than 30 kPa, for example equal to or higher than 35 kPa or equal to or higher than 40 kPa, such as equal to or higher than 45 kPa. According to some examples, the force may be equal to or higher than 100 MPa, for example equal to or higher than 250 MPa.

The slip ring brushes 7 are arranged stationarily and the slip rings 3 are rotated concurrently with rotation of the shaft 9.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of producing a composite material for a slip ring brush (7), the method comprising:
a) mixing copper powder with a grain size of 10-500 µm with graphene to obtain a copper-graphene mixture, the content of graphene in the copper-graphene mixture being in a range of 0.5-5 wt.% of the total weight of the copper-graphene mixture, and
b) sintering the copper-graphene mixture.

2. Method as claimed in claim 1, wherein the sintering is spark plasma sintering.

3. Method as claimed in claim 1 or 2, wherein step b) is performed at a temperature of 650-950°C and under a pressure of 10-100MPa.

4. Method as claimed in any of the preceding claim, wherein step b) is performed under an inert atmosphere.

5. Method as claimed in any of the preceding claims, wherein step b) is performed for at most 20 minutes, such as at most 15 minutes, such as at most 10 minutes.

6. Method as claimed in any of the preceding claims, wherein step b) is performed for at least 2 minutes, such as at least 3 minutes.

7. Method as claimed in any of the preceding claims, wherein the content of graphene in the copper-graphene mixture is in a range of 1-3 wt.% of the total weight of the copper-graphene mixture.

8. Method as claimed in any of the preceding claims, wherein step a) in addition to mixing the copper powder with the graphene, involves mixing additives with the copper powder and the graphene to obtain the copper-graphene mixture.

9. Method as claimed in claim 8, wherein the additives include a stabilizer and a binder.

10. Method as claimed in any of the preceding claims, wherein the mixing in step a) is a mechanical mixing.

11. Method as claimed in any of the preceding claims, wherein step b) is the only sintering step performed for producing the composite material.

12. Method as claimed in any of the preceding claims, wherein the graphene is graphene nanoplatelets.

13. Composite material obtainable by means of the method of any of the preceding claims.

14. Slip ring brush (7) comprising a composite material as claimed in claim 13.
